(19) Europäisches Patentamt
European Patent Office
Office européen des brevets

(11) EP 1 566 255 B1

(12) # EUROPEAN PATENT SPECIFICATION

(45) Date of publication and mention of the grant of the patent:
**18.07.2012 Bulletin 2012/29**

(51) Int Cl.:
***B29C 44/44*** *(2006.01)* ***C08F 297/08*** *(2006.01)*
***C08J 9/232*** *(2006.01)* ***C08J 9/20*** *(2006.01)*
***B29K 105/04*** *(2006.01)*

(21) Application number: **05001387.9**

(22) Date of filing: **25.01.2005**

(54) **Thick foam molding and process for production thereof**

Dickes geschäumtes Formteil und Herstellungsverfahren dafür

Moulage expansé épais et son procédé de préparation

(84) Designated Contracting States:
**AT BE BG CH CY CZ DE DK EE ES FI FR GB GR HU IE IS IT LI LT LU MC NL PL PT RO SE SI SK TR**

(30) Priority: **28.01.2004 JP 2004020305**

(43) Date of publication of application:
**24.08.2005 Bulletin 2005/34**

(73) Proprietor: **JSP CORPORATION**
**Tokyo 100-0005 (JP)**

(72) Inventors:
- **Okuyama, Mitsuru**
**c/o Yokkaichi Research Center**
**Yokkaichi-Shi**
**Mie 510-0881 (JP)**
- **Kunikazu, Nagasaki**
**c/o Yokkaichi Research Center**
**Yokkaichi-Shi**
**Mie 510-0881 (JP)**

(74) Representative: **Müller-Gerbes Wagner Albiger Patentanwälte**
**Friedrich-Breuer-Strasse 72-78**
**53225 Bonn (DE)**

(56) References cited:
**EP-A- 0 928 806 US-A- 3 855 377**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 566 255 B1

## Description

BACKGROUND OF THE INVENTION

Field of the Invention:

The present invention relates to a thick foam molding obtainable by in-mold molding of expanded thermoplastic resin beads and having excellent fusion-bonding efficiency (fusion-bonding between expanded beads) even in a central region thereof, and to a process for preparing the thick foam molding.

Description of Prior Art:

Foamed bodies of a crystalline thermoplastic resin, such as a polyethylene-based resin or a polypropylene-based resin, showing a clear endothermic peak in a DSC curve thereof obtained by heat flux differential scanning calorimetry have excellent chemical resistance, excellent cushioning property and low brittleness and are, therefore, suitably used in various applications such as various cushioning and heat insulating materials.

One known method for obtaining such foamed bodies is an in-mold molding method in which expanded beads of a crystalline thermoplastic resin are filled in a mold cavity and fuse-bonded together by being heated with steam. The thickness of the foam moldings obtained by the conventional in-mold molding has been at most 150 to 200 mm, since the expanded beads in a central region of the molding fail to be sufficiently fuse-bonded to each other as the thickness thereof increases. Observation of a cross-section of a thick foam molding has revealed that only expanded beads located up to a depth of 70 to 80 mm from the surface of the molding are fully fuse-bonded together. Since steam is not sufficiently fed to a central region of the mold cavity, the expanded beads at that region are not sufficiently heated and fused-bonded to each other.

To improve the fusion-bonding of the expanded beads, a thought may occur to use steam having a higher pressure. In this case, however, a depression is unavoidably formed immediately after the molding step at a center part of the outer surface of the molding. Such a deformation cannot be recovered even when the molding is aged in a chamber at 50 to 80°C. To cope with the problem of deformation, a method is known in which expanded beads are previously impregnated with air to increase the inside pressure thereof. When such expanded beads are molded, however, inflation of the expanded beads occurs before a temperature sufficient to fuse-bond the beads is reached, so that steam is prevented from being fed sufficiently to a central region of the mold cavity. Therefore, only the expanded beads present near the surface of the molding are fully fuse-bonded together and the expanded beads in the central region of the molding remain un-bonded to each other.

Thus, with the known in-mold molding method, it has been impossible to produce thick foam moldings of a crystalline thermoplastic resin having satisfactory fusion bonding efficiency in any region thereof. On the other hand, it is an outstanding problem in the art to provide a highly productive board production method in which boards are prepared by cutting thick, block-like foam moldings of a non-crystalline polystyrene resin.

Japanese patent No. 3,146,004 discloses a method for preparing a thick foam molding in which expanded polyolefin resin beads are filled in a mold cavity and heated with steam in a specific manner. Namely, the expanded beads in the mold cavity are first preheated with steam to a predetermined temperature at which fusion-bonding thereof does not proceed and maintained for steaming at that temperature with or without feeding additional steam. Thereafter, the preheated beads are heated and fuse-bonded together. The Japanese patent alleges that the preheating and above steaming treatment can improve fusion-bonding efficiency of the expanded beads and can produce a thick foam molding. The proposed method, however, cannot be performed using the general-type type molding device. Rather, it is necessary to plant a plurality of temperature sensors on a position at depth of 3 to 30 mm from inside surfaces of the mold and to use a specific temperature control mechanism in order to measure the temperature of the molding itself. Additionally, in order to prepare a foam molding having an expansion ratio of more than 30, it is necessary to use expanded beads having an increased inside pressure. In this case, however, since the expanded beads in a surface region of the molding excessively inflate, foam moldings having a thickness of more than 200 mm and having satisfactory fusion-bonding efficiency in the central region thereof cannot be produced.

Japanese Unexamined Patent Publication No. H10-77359 discloses an expanded bead having a core of a crystalline thermoplastic resin in an expanded state, and a coat of an ethylene-based polymer in an unexpanded state, wherein the coat surrounds the core. The expanded beads are used to produce a relatively thin foam molding having a length of 200 mm, a width of 300 mm and a thickness of 25 mm. The Japanese publication does not at all disclose a thick foam molding having excellent fusion-bonding efficiency in the central region thereof.

EP 0 928 806 A discloses a thin molded foamed product of 200 mm x 300 mm x 25 mm having a density of 30 $kg/m^3$ and prepared by sintering of expanded beads.

However, production of a thick foam molding of a diameter of at least 200 mm with excellent fusion-bonding

property between the foamed particles, fine appearance of the molded surface and a high foaming ratio is not possible.

SUMMARY OF THE INVENTION

It is an object of the present invention to provide a thick foam molding obtainable by in-mold molding of expanded beads of a crystalline thermoplastic resin and showing excellent fusion-bonding not only in an outer region but also in a central region thereof.

Another object of the present invention is to provide a process for producing a thick foam molding by in-mold molding of expanded crystalline thermoplastic resin beads.

In accomplishing the foregoing objects, there is provided in accordance with the present invention a thick foam molding having a size permitting the formation of a sphere having a diameter of at least 200 mm by cutting, said foam molding being obtainable by molding expanded thermoplastic resin beads in a mold cavity and having a fusion-bonding efficiency of at least 50 % in a central region of the foam molding, wherein said foam molding has an apparent density of smaller than 30g/L but not smaller than 10 g/L,
wherein each of said expanded thermoplastic resin beads comprises:

a core which is in an expanded state and which comprises a crystalline polypropylene resin, and
a coat which is in a substantially unexpanded state and which surrounds said core, said coat comprising a crystalline polyolefin polymer which is lower in melting point by at least 15°C than that of said crystalline polypropylene resin or a non-crystalline polyolefin polymer which is lower in Vicat softening point by at least 15°C than that of said crystalline polypropylene resin.

In another aspect, the present invention provides a process for preparing a thick foam molding having a size permitting the formation of a sphere having a diameter of at least 200 mm by cutting,
comprising filling expanded thermoplastic resin beads in a mold cavity, and
heating said beads in said mold cavity with steam to fuse and bond said beads together, wherein said expanded thermoplastic resin beads have a bulk density of 10 to 300 g/L and an inside pressure of 0.005 to 0.98 MPa(G),
wherein each of said expanded thermoplastic resin beads comprises:

a core which is in an expanded state and which comprises a crystalline polypropylene resin, and
a coat which is in a substantially unexpanded state and which surrounds said core, said coat comprising a crystalline polyolefin polymer which is lower in melting point by at least 15°C than that of said crystalline polypropylene resin or a non-crystalline polyolefin polymer which is lower in Vicat softening point by at least 15°C than that of said crystalline polypropylene resin.

The foam molding according to the present invention has a large thickness sufficient to prepare a sphere having a diameter of at least 200 mm by cutting and yet a high fusion-bonding efficiency even in a central region thereof. Therefore, the foam molding has good processability such as slice- and cut-processability and gives processed products free of cracks, breakage or debonding of the beads. Thus, for example, the entire foam molding may be utilized as cushioning materials after cutting into plates or further punching the plates into desired shapes. No problems are caused even when the central region of the foam molding is included in the plates or the cut-out products obtained from the plates.

Further, the foam molding may also be used as such. In such a case, the foam molding is hardly broken, even when a great load is locally applied thereto or a bending force is applied thereto.

By using expanded beads having a composite structure comprising a specific combination of a core and a coat for the production of an in-mold foam molding, the fusion-bonding between the beads is excellent throughout the molding. In addition, even when the expanded beads are molded after having been treated to have an increased inside pressure, the fusion-bonding property thereof is not adversely affected. Therefore, it is possible to obtain a foam molding having a high expansion ratio and a high fusion-bonding efficiency even in a central region thereof.

BRIEF DESCRIPTION OF DRAWINGS

Other objects, features and advantages of the present invention will become apparent from the detailed description of the preferred embodiments which follows, when considered in the light of the accompanying drawings, in which:

FIG. 1 is a sectional view diagrammatically illustrating a mold for producing a foam molding of the present invention;
FIGS. 2(a) through 2(e) show states of the steam feed to the mold of FIG. 1 during the process for producing a foam molding of the present invention;

FIG. 3(a) is an elevational view schematically illustrating a method of measuring the fusion-bonding efficiency in a central region of a foam molding; and

FIG. 3(b) is a plan view of FIG. 3(a).

DETAILED DESCRIPTION OF THE PREFERRED EMBODIMENTS OF THE INVENTION

The foam molding according to the present invention is a thick foam molding having a size permitting the formation of a sphere having a diameter of at least 200 mm by cutting. The size of the foam molding is herein expressed in terms of a diameter of a sphere obtainable from the foam molding rather than in terms of a thickness, since, when the molding has a complicated shape, it is difficult or impossible to precisely define the thickness thereof. A difficulty in achieving the satisfactory fusion-bonding between expanded beads in a central region of a cube having a side of 200 mm is similar to a difficulty associated in a sphere having a diameter of 200 mm. However, a difficulty in obtaining such a satisfactory fusion-bonding is not great in the case of a hollow cylinder having a length of 250 mm, an outer diameter of 250 mm and an inner diameter of 200 mm, though the article may be regarded as being relatively thick. Such a hollow cylinder does not permit a sphere having a diameter of 200 mm to be produced by cutting.

The foam molding of the present invention is obtainable by molding in a mold cavity expanded thermoplastic resin beads each having a composite structure having a core which is in an expanded state and a coat which is in a substantially unexpanded state and covers the core.

The core comprises a crystalline polypropylene resin.

As used herein, the term "crystalline polypropylene resin" is intended to refer to a thermoplastic resin which shows an endothermic peak attributed to the fusion of the thermoplastic resin in a DSC curve obtained by heat flux differential scanning calorimeter (DSC device) in accordance with JIS K7121(1987) in which the condition of "in the case of the measurement of melting temperature after the sample piece has been heat treated under specified conditions" is adopted (in the condition adjustment, the heating and cooling rates are each 10°C/min) and in which the test piece is heated at a rate of 10°C/min.

Examples of the crystalline polypropylene resin constituting the core of the expanded beads include polyolefin resins such as polypropylene resins. These resins may be used singly or in combination of two or more thereof. Above all, propylene homopolymers and random or block copolymers of propylene with one or more comonomer such as ethylene and/or an $\alpha$-olefin other than propylene are preferably used.

As used herein, the term "polyolefin resins" is intended to refer to thermoplastic resins containing 50 mole % or more, preferably 60 mole % or more, more preferably 80 to 100 mole %, of an olefin. Similarly, the term "polypropylene resins" is intended to refer to thermoplastic resins containing 50 mole % or more, preferably 60 mole % or more, more preferably 80 to 100 mole %, of propylene. Similarly, the term "polyethylene resins" is intended to refer to thermoplastic resins containing 50 mole % or more, preferably 60 mole % or more, more preferably 80 to 100 mole %, of ethylene. Further, the above-mentioned polyolefine resin may be mixed with other thermoplastic resin. The amount of other thermoplastic resin is generally 100 parts by weight or less, preferably 50 parts by weight or less, more preferably 30 parts by weight or less, furthermore preferably 15 parts by weight or less, most preferably 5 parts by weight or less, per 100 parts by weight of the polyolefine resin.

If desired, the core may contain one or more additives, such as a catalyst neutralizing agent, a lubricant or a nucleating agent, in an amount which does not adversely affect the object of the present invention, preferably in an amount of 40 parts by weight or less, more preferably 30 parts by weight or less, most preferably 0.001 to 15 parts by weight or less, per 100 parts by weight of the crystalline thermoplastic resin of the core.

It is preferred that the crystalline thermoplastic resin of the core have a melting point (Tm) of 100 to 250°C, more preferably 110 to 170°C, most preferably 120 to 165°C, for reasons of satisfactory heat processability and heat resistance during the in-mold molding of the expanded beads with high pressure steam. The crystalline thermoplastic resin preferably has a Vicat softening point of 70 to 200°C, more preferably 90 to 160°C, most preferably 110 to 150°C.

As used herein, the term "melting point (Tm)" is intended to refer to a temperature of the apex of the endothermic peak in a DSC curve obtained by heat flux differential scanning calorimetry in accordance with JIS K7121 (1987) in which the condition of "in the case of the measurement of melting temperature after the sample piece has been heat treated under specified conditions" is adopted (in the condition adjustment, the heating and cooling rates are each 10°C/min) and in which the test piece is heated at a rate of 10°C/min. When two or more endothermic peaks are present, the temperature of the peak having the highest apex relative to the base line of the higher temperature side represents the melting point. When two or more highest peaks are present, then the arithmetic mean of the apex temperatures represents the melting point.

As used herein, the term "Vicat softening point" is intended to refer to a Vicat softening point as measured by the A50 Method in accordance with JIS K7206(1999).

The coat covering the core of the crystalline thermoplastic resin comprises a polyolefin polymer which is selected from crystalline polyolefin polymers showing a clear endothermic peak in the above-described melting point measurement

and non-crystalline polymers showing no clear endothermic peak in the above-described melting point measurement. The crystalline polyolefin polymer constituting the coat has a melting point lower by at least 15°C than that of the crystalline thermoplastic resin constituting the core. The non-crystalline polyolefin polymer constituting the coat has a Vicat softening point lower by at least 15°C than that of the crystalline thermoplastic resin constituting the core. By using the composite expanded beads having a core-coat structure in which the melting point or Vicat softening point of the polyolefin polymer of the coat is lower by at least 15°C than the melting point or Vicat softening point of the crystalline thermoplastic resin of the core, it is possible to produce a thick foam molding which is capable of forming a sphere having a diameter of 200 mm by cutting and which has satisfactory fusion-bonding efficiency throughout the foam molding, i.e. not only in an outer region thereof but also in an inner, central region thereof. Such an improved fusion-bonding efficiency in the central region of the foam molding is considered to be ascribed to the structure of the expanded beads which can prevent inflation of the beads at a temperature permitting the fusion-bonding between the beads to proceed.

Thus, the crystalline polyolefin polymer constituting the coat should have a melting point lower by at least 15°C, preferably by at least 20°C, still more preferably by 20 to 60°C, most preferably by 20 to 40°C, than that of the crystalline thermoplastic resin constituting the core. The non-crystalline polyolefin polymer constituting the coat should have a Vicat softening point lower by at least 15°C, preferably by at least 20°C, still more preferably by 20 to 60°C, most preferably by 20 to 40°C, than that of the crystalline thermoplastic resin constituting the core.

For reasons of high heat resistance, the crystalline polyolefin of the coat preferably has a melting point of 60°C or more, more preferably 70°C or more, still more preferably 80°C or more, most preferably 90°C or more, while the non-crystalline preferably has a Vicat softening point of 50°C or more, more preferably 60°C or more, still more preferably 70°C or more, most preferably 80°C or more.

In the following description, the crystalline and non-crystalline polyolefin polymers will be simply referred to as polyolefin polymer for reasons of brevity unless there is a need to specifically mention otherwise.

When the difference in melting point or Vicat softening point between the crystalline thermoplastic resin of the core and the polyolefin polymer of the coat is less than 15°C, it is difficult to form suitable expanded beads which are prevented from inflating at a temperature causing the fusion-bonding between the beads. Namely, it is difficult to produce suitable expanded beads in which the inflation precedes the fusion-bonding. When expanded beads which do not have the above characteristics are used for the production of a thick foam molding in a mold, inflation of the expanded beads in an outer region of the foam molding occurs before the expanded beads in an inner region are fuse-bonded to each other, so that there remain almost no interstices between the expanded beads which are present adjacent to the inside surface of the mold. Therefore, steam cannot sufficiently penetrate into an inner region of the thick foam molding, thereby causing fusion-bonding failure in the central region. Further, when the difference in melting point or Vicat softening point between the crystalline thermoplastic resin of the core and the polyolefin polymer of the coat is small, a multiplicity of pores or cells are apt to form in the coat during the production of the expanded beads. Therefore, there is a possibility that the coat is not in a substantially unexpanded state. With composite expanded beads whose coats are in an expanded state, the resulting foam molding does not have strong fusion-bonding between the beads.

As used herein, the term "substantially unexpanded state" is intended to refer not only to a state in which cells are not present at all (including a state in which cells once formed disappear due to melting and breakage) but also to a state in which very fine cells are present in a small amount. Such fine cells, which may have an open cellular structure or a closed cellular structure, preferably have a maximum length of 10 μm or less. The cell size may be determined by microscopic observation of a cross-section of the coat and the "maximum length" is the longest straight line extending between two points on the periphery of the given cell. The amount (number) of the very fine cells having a maximum diameter of 10 μm or less is preferably at most 3, more preferably at most 2, per 500 $\mu m^2$ of a sectional area of the coat.

As described previously, the polyolefin polymer which forms the coat of the expanded beads of the present invention may be a crystalline polyolefin polymer having a melting point or may be a non-crystalline polyolefin polymer having substantially no melting point.

Examples of the crystalline polyolefin polymer showing a melting point include high pressure low density polyethylene resins, linear low density polyethylene resins, linear very low density polyethylene resins and copolymers of ethylene with one or more comonomers such as vinyl acetate, unsaturated carboxylic acid esters, unsaturated carboxylic acids and vinyl alcohol. Polypropylene resins or polybutene resins may also be used as the crystalline polyolefin polymer as long as the melting point thereof is lower by at least 15°C than the crystalline thermoplastic resin used in the core.

Examples of the non-crystalline polyolefin polymer showing substantially no melting point include polyethylene-based rubbers (e.g. ethylene-propylene rubbers, ethylene-propylene-diene rubbers, ethylene-acrylic rubbers, chlorinated polyethylene rubbers and chlorosulfonated polyethylene rubbers), polyolefin elastomers and non-crystalline polyolefin resins. Above all, high pressure low density polyethylene resins and linear low density polyethylene resins are preferable. An example of suitable linear low density polyethylene resin is a linear low density polyethylene resin obtained using a metallocene polymerization catalyst (this polyethylene resin will be referred to as MeLLDPE). The above polyolefin polymer may be used singly or as a mixture of two or more thereof.

The coat may be formed from a polymer composition comprising the polyolefin polymer and the same crystalline

thermoplastic resin as used in the core. The use of the polymer composition has a merit that the adhesion between the core and the coat may be improved. Thus, when the polyolefin polymer used in the coat and the crystalline thermoplastic resin used in the core are not easily heat-bonded to each other, the use of a mixture of the polyolefin polymer and the crystalline thermoplastic resin as the coat is advantageous.

The amount of the crystalline thermoplastic resin in the polymer composition is generally 1 to 100 parts by weight, preferably 2 to 80 parts by weight, more preferably 5 to 50 parts by weight, per 100 parts by weight of the polyolefin polymer. When the amount of the crystalline thermoplastic resin in the polymer composition is excessively large, the crystalline thermoplastic resin tends to form a matrix or sea. In such a case, there is a possibility that the resulting expanded beads are apt to start inflating before the beads are heated to a temperature sufficient to fuse-bond to each other. On the other hand, when the amount of the crystalline thermoplastic resin is excessively small, the bonding between the core and coat becomes insufficient in a case where the crystalline thermoplastic resin is of a type which is poor in heat-bonding to the polyolefin polymer, so that the fusion-bonding efficiency of the expanded beads in an inner region of the thick foam molding becomes unsatisfactory.

The coat of the composite expanded beads may contain a thermoplastic polymer other than the polyolefin polymer and/or one or more additives, such as a catalyst neutralizing agent, a lubricant and nucleating agent, in such an amount that the object of the present invention is not adversely affected. The amount of the thermoplastic polymer is preferably 100 parts by weight or less, more preferably 50 parts by weight or less, still more preferably 30 parts by weight or less, yet still more preferably 15 parts by weight or less, most preferably 5 parts by weight or less, per 100 parts by weight of the polyolefin polymer. The amount of the additives is preferably 40 parts by weight or less, more preferably 30 parts by weight or less, most preferably 0.001 to 15 parts by weight, per 100 parts by weight of the polyolefin polymer.

It is particularly preferred that the core in an expanded state comprise a polypropylene resin having a melting point of 120 to 165°C and that the coat comprise a polyethylene polymer having a melting point of 125°C or less, more preferably 80 to 125°C, most preferably 90 to 120°C, with the proviso that the melting point of the polyethylene polymer is lower by at least 15°C than that of the polypropylene resin. In this case, the polyethylene polymer constituting the coat is preferably MeLLDPE. Though polyethylene polymers are generally not easily heat-bonded to polypropylene resins, MeLLDPE shows good heat-bonding property relative to polypropylene resins. Thus, the use of MeLLDPE is advantageous because the core and the coat are hardly separated from each other during the expansion of the composite resin particles or pellets for the production of expanded beads. The use of MeLLDPE gives an additional merit that the expanded beads are hardly adhered to each other during the production thereof. It is inferred that such a merit is ascribed to the fact that MeLLDPE has a sharp molecular weight distribution and is free or almost free of low molecular weight components. The density of MeLLDPE is generally in the range of 0.890 to 0.935 g/cm$^3$ , preferably 0.898 to 0.920 g/cm$^3$.

The above-mentioned polypropylene resin having a melting point of 120 to 165°C and constituting the core is preferably a propylene homopolymer or a polypropylene copolymer having a propylene structural unit content of 100 to 85 mole % and a comonomer structural unit content of 0 to 15 mole %, wherein the comonomer is at least one of ethylene and $\alpha$-olefins having 4 to 20 carbon atoms. More preferably, the polypropylene resin is a polypropylene copolymer having a propylene structural unit content of 85 to 98 mole % and a comonomer structural unit content of 2 to 15 mole %, wherein the comonomer is at least one of ethylene and $\alpha$-olefins having 4 to 20 carbon atoms for reasons of good mechanical properties and expansion property. Examples of the $\alpha$-olefins include 1-butene, 1-pentene, 1-hexene, 1-octene and 4-methyl-1-butene.

It is also preferred that the above-mentioned polypropylene resin have a proportion of position irregular units based on 2,1-insertion to all propylene insertions of 0.5 to 2.0 % and a proportion of position irregular units based on 1,3-insertion to all propylene insertions of 0.005 to 0.4 %, which proportions are determined by $^{13}$C-NMR spectrum.

When the polypropylene resin have a proportion of position irregular units based on 2,1-insertion of 0.5 % or more or a proportion of position irregular units based on 1,3-insertion of 0.005 % or more, in-mold foam moldings obtained using expanded beads each having a core containing the polypropylene resin has a reduced compression set. When the proportion of position irregular units based on 2,1-insertion is 2.0 % or less or when the proportion of position irregular units based on 1,3-insertion is 0.4 % or less, on the other hand, a reduction in mechanical strengths such as in bending strength and tensile strength, of the polypropylene resin is so small that the expanded beads and foam moldings obtained therefrom have satisfactory mechanical strengths.

The position irregular units based on 2,1-insertion and 1,3-insertion contained in the polypropylene resin have a function to decrease the crystallinity thereof. In particular, these position irregular units have a function to reduce the melting point thereof and to reduce the degree of crystallinity thereof. Because of these functions, resin particles formed of the polypropylene resin show improved foaming and expanding efficiency and, at the same time, foam moldings obtained has a reduced compression set. Therefore, the foam moldings obtained by molding the expanded beads each having a core comprising the above polypropylene resin with specific position irregular units has a small compression set.

As used herein, the propylene structural unit content, the comonomer (ethylene and/or $\alpha$-olefins having 4 to 20 carbon atoms) structural unit content, the position irregular unit proportions (percentages) and hereinafter described

isotactic triad fraction are a measured by $^{13}C$-NMR spectroscopy.

The $^{13}C$-NMR spectrum may be measured, for example, as follows.

A sample in an amount of 350 to 500 mg is placed in a sample tube for NMR having a diameter of 10 mm and is completely dissolved in about 2.0 ml of o-dichlorobenzene as a solvent, while using about 0.5 ml of benzene deuteride as an internal lock. The sample is then subjected to measurement at 130°C by a proton complete decoupling method. The measurement conditions involve a flip angle of 65 degrees and a pulse interval of 5T1 or more (T1 represents the longest value in the spin lattice relaxation time of methyl group). In a polypropylene resin, the spin lattice relaxation time of a methylene group and a methine group is shorter than that of a methyl group. Thus, under these measurement conditions, the recovery of magnetization of all carbon atoms is 99 % or more. The detection sensitivity for position irregular units by $^{13}C$-NMR spectroscopy is generally 0.01 %. The sensitivity may be improved by increasing the integration number.

Regarding the chemical shift in the above measurement, the chemical shift of the peak based on methyl group at the third unit in 5 chains of propylene unit, which are formed by head-to-tail bond and in which the direction of methyl branch is the same, is determined to be 21.8 ppm. With this peak as a reference, the chemical shift of other carbon peaks are determined. With this reference, the peak based on methyl group at the second unit in the 3 chains of the propylene units (represented by PPP[mm] in the structural formula shown below) appears at a chemical shift of 21.3 to 22.2 ppm, the peak based on the second unit in the 3 chains of the propylene units (represented by PPP[mr] in the structural formula shown below) appears at a chemical shift of 20.5 to 21.3 ppm, and the peak based on methyl group at the second unit in the 3 chains of the propylene units (represented by PPP[rr] in the structural formula shown below) appears at a chemical shift of 19.7 to 20.5 ppm.

The propylene units PPP[mm], PPP[mr] and PPP[rr] represent as follows.

PPP[mm]: 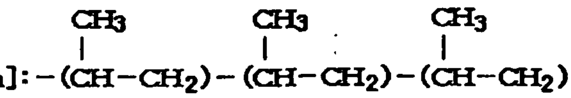

PPP[mr]: 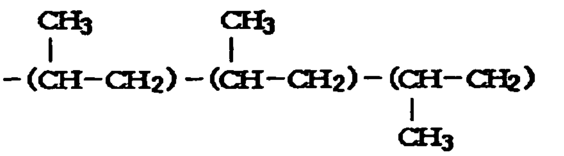

PPP[rr]: 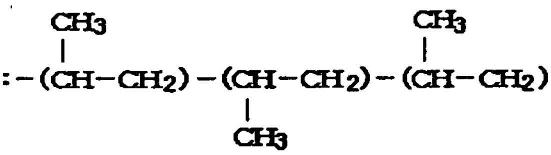

The polypropylene resin having position irregular units based on 2,1-insertion and 1,3-insertion is a polypropylene resin containing the following partial structures (I) and (II) in specific amounts.

Structure (I)

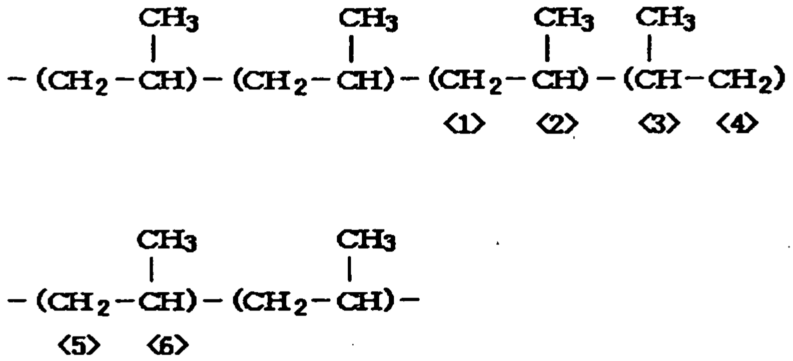

Structure (II)

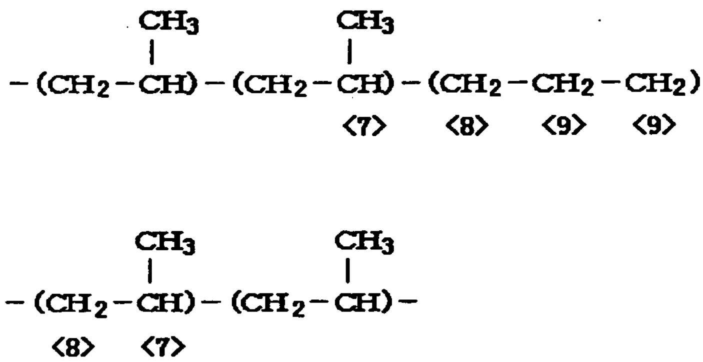

The above partial structures are considered to be formed due to positional regularity created during the polymerization of propylene using a metallocene polymerization catalyst. Namely, the propylene monomer generally reacts through 1,2-insertion where the methylene side thereof is bonded to a metal component of the catalyst. On rare occasions, however, the propylene monomer undergoes 2,1-insertion and 1,3-insertion. The 2,1-insertion is a reaction mode in which the direction of addition is reverse to that in the 1,2-insertion and which results in the formation of the irregular unit represented by the partial structure (I) in the polymer chain. In the case of the 1,3-insertion, the propylene monomer is inserted in the polymer chain at the C-1 and C-3 thereof to form the linear unit represented by the above partial structure (II).

The polypropylene resin having the above specific position irregular unit proportions may be obtained by using a suitably selected catalyst such as a metallocene polymerization catalyst having a hydroazulenyl group as a ligand thereof. The metallocene polymerization catalyst comprises a transition metal compound having a metallocene structure and a cocatalyst or activator. The position irregular unit proportions vary with the chemical structure of the metal complex component of the catalyst but generally increase with the increase of the polymerization temperature. A polymerization temperature of 0 to 80°C may be suitably used for the purpose of adjusting the position irregular unit proportions to the specific ranges.

The metal complex component as such may be used as the catalytic component. Alternatively, the metal complex component may be supported on granules or fine particulates of an inorganic or organic solid carrier to form a solid catalyst. In this case, the amount of the metal complex component is generally 0.001 to 10 mmol, preferably 0.001 to 5 mmol, per 1 g of the carrier.

Among various metallocene polymerization catalysts having a hydroazulenyl group as a ligand, catalysts containing titanium, zirconium or hafnium are preferably used. Above all, a zirconium complex is particularly preferable for reasons of high polymerization activity. Most preferably, a zirconium dichloride complex, particularly a crosslinked complex, is used as the metallocene polymerization catalyst. Specific examples of the suitable metallocene polymerization catalyst include methylenebis{1,1'-(2-methyl-4-phenyldihydroazulenyl)}-zirconium dichloride, methylenebis{1,1'-(2-ethyl-4-phenyldihydroazulenyl)}-zirconium dichloride, methylenebis{1,1'-(4-phenyldihydroazulenyl)}zirconium dichloride, methylenebis{1,1'-(4-naphthyldihydroazulenyl)}zirconium dichloride, ethylenebis{1,1'-(2-methyl-4-phenyldihydroazulenyl)}-zirconium dichloride, ethylenebis{1,1'-(2-ethyl-4-phenyldihydroazulenyl)}-zirconium dichloride, ethylenebis{1,1'-(4-phenyldihydroazulenyl)}zirconium dichloride, ethylenebis{1,1'-(4-naphthyldihydroazulenyl)}zirconium dichloride, isopropylidenebis{1,1'-(2-methyl-4-phenyldihydroazulenyl)}zirconium dichloride, isopropylidenebis{1,1'-(2-ethyl-4-phenyldihydroazulenyl)}-zirconium dichloride, isopropylidenebis{1,1'-(4-phenyldihydroazulenyl)}zirconium dichloride, isopropylidenebis{1,1'-(4-naphthyldihydroazulenyl)}-zirconium dichloride, dimethylsilylenebis{1,1'-(2-methyl-4-phenyldihydroazulenyl)}zirconium dichloride, dimethylsilylenebis{1,1'-(2-ethyl-4-phenyldihydroazulenyl)}zirconium dichloride, dimethylsilylenebis{1,1'-(4-phenyldihydroazulenyl)}-zirconium dichloride, dimethylsilylenebis{1,1'-(4-naphthyldihydroazulenyl)}-zirconium dichloride, diphenylsilylenebis{1,1'-(2-methyl-4-phenyldihydroazulenyl)}zirconium dichloride, diphenylsilylenebis{1,1'-(2-ethyl-4-phenyldihydroazulenyl)}zirconium dichloride, diphenylsilylenebis{1,1'-(4-phenyldihydroazulenyl)}-zirconium dichloride, diphenylsilylenebis{1,1'-(4-naphthyldihydroazulenyl)}-zirconium dichloride.

Above all, the use of dimethylsilylenebis{1,1'-(2-methyl-4-phenyldihydroazulenyl)}zirconium dichloride or dimethylsilylenebis{1,1'-(2-ethyl-4-phenyldihydroazulenyl)}zirconium dichloride is particularly preferred for reasons of easiness in controlling the position irregular unit proportions and in obtaining a polypropylene resin having an isotactic triad fraction of at least 97 %.

Example of the cocatalyst used together the above metal complex components include aluminoxanes such as methyl aluminoxane, isobutyl aluminoxane and methylisobutyl aluminoxane; Lewis acids such as triphenylborane, tris (pentafluorophenyl)borane and magnesium chloride; and ionic compounds such as dimethylanilinium tetrakis(pentafluorophenyl)borate. The cocatalyst may be used together with an organic aluminum compounds, such as trimethyl aluminum, triethyl aluminum or triisobutyl aluminum.

The isotactic triad fraction in the polymer chains of the polypropylene resin is represented by the formula shown below. In the partial structure (II), one methyl group derived from the propylene monomer is missing as a result of the 1,3-insertion.

$$mm\ (\%) = \frac{S - 3\times(P/6)}{\Sigma ICH^3 - 4\times(P/6) - Q/3}$$

wherein

mm represents the isotactic triad fraction,

$\Sigma ICH_3$ represents a sum of peak areas (integrated intensity of peaks) of all methyl groups (all peaks appearing in the chemical shift range of 19 to 22 ppm),

S represents a peak area of the methyl group appearing in the chemical shift range of 21.1 to 21.8 ppm,

P represents A<1> + A<2> + A<3> + A<4> + A<5> + A<6>, and Q represents A<7> + A<8> + A<9>

where A<1>, A<2>, A<3>, A<4>, A<5>, A<6>, A<7>, A<8> and A<9> represent the areas of peaks at 42.3 ppm, 35.9 ppm, 38.6 ppm, 30.6 ppm, 36.0 ppm, 31.5 ppm, 31.0 ppm, 37.2 ppm and 27.4 ppm, respectively, and represent proportions of the carbons indicated by <1> through <9> in the partial structures (I) and (II) shown above.

As used herein, the proportions of 2,1-inserted propylene and 1,3-inserted propylene relative to all propylene insertions are as calculated according to the following formulas:

$$\text{Proportion of 2,1-insertion (\%)} = \frac{(P/6) \times 1000 \times 1/5}{\Sigma I(27\text{-}48)}$$

$$\text{Proportion of 1,3-insertion (\%)} = \frac{(Q/6) \times 1000 \times 1/5}{\Sigma I(27\text{-}48)}$$

wherein
$\Sigma I(27\text{-}48)$ represents a sum of peak areas (integrated intensity of peaks) of all peaks appearing in the chemical shift range of 27 to 48 ppm, and
P and Q are as defined above in connection with the isotactic triad fraction.

It is also preferred that the polypropylene resin satisfy a relationship between its melting point Tm (°C) and its water vapor permeability Y ($g/m^2/24hr$) as follows:

$$(-0.20)\times Tm + 35 \leqq Y \leqq (-0.33)\times Tm + 60.$$

The water vapor permeability Y is that of a film of the polypropylene resin and measured according to JIS K7129(1992) "testing method for water vapor transmission rate of plastic film and sheet". The test is performed at a temperature of 40±0.5°C and a relative humidity of 90±2 % using an IR sensor.

A polypropylene resin satisfying the above relationship exhibits suitable water vapor permeability. Thus, when expanded beads having the core comprising such a polypropylene resin are molded, penetration of steam in the beads (cores) is facilitated to improve the secondary expansion property of the beads. Thus, it becomes easy to produce foam moldings free of or almost free of gaps between the expanded beads.

Expanded beads are generally prepared by a method in which resin particles or pellets dispersed in water are impregnated with a blowing agent, the resulting dispersion in a higher pressure state being then discharged into a lower pressure atmosphere to expand the resin particles. In this case, the proper water vapor permeability facilitates the penetration of water and the blowing agent into the resin particles. As a result, the water and blowing agent can be uniformly dispersed in the resin particles so that the cell diameter of the resulting expanded beads becomes uniform and the expansion ratio thereof is improved. Thus, the foam molding obtained from the expanded beads shows satisfactory compressive strength and is low in compression set.

The correlation between the water vapor permeability Y and the melting point Tm may be perhaps ascribed to the fact that the expansion temperature for the production of expanded beads and the temperature of the saturated steam for the production of foam moldings are generally proportional to the melting point Tm.

The polypropylene resin which satisfy the above-described relationship between the vapor permeability Y are the melting point Tm of polypropylene resin may be obtained by suitably selecting the metallocene polymerization catalyst for the production thereof. In particular, the use of a crosslinking-type bis{1,1'-(4-hydroazulenyl))zirconium dichloride as the metal complex component can suitably produce the desired polypropylene resin.

It is also preferred that the polypropylene resin used for the formation of the core have an isotactic triad fraction (mm fraction) in the polymer chains of the propylene resin , as determined by $^{13}C$-NMR spectroscopy, of at least 97 %, more preferably at least 98 %, for reasons of improved mechanical properties of the polypropylene resin and, therefore, of foam moldings obtained from expanded beads having the cores formed of the polypropylene resin.

It is further preferred that the polypropylene resin used for the formation of the core have a melt flow rate (MFR) of 0.5 to 100 g/10 min, more preferably 1.0 to 50 g/10 min, most preferably 1.0 to 30 g/10 min, for reasons of improved industrial production efficiency for expanded beads and of improved mechanical properties of foam moldings obtained therefrom. As used herein, MFR is intended to refer to melt mass flow rate measured under the conditions described in JIS K6921-2(1997), Table 3.

The expanded beads used in the present invention may be prepared by foaming and expanding composite resin particles or pellets having the above-described core-coat structure.

The composite resin particles may be suitably prepared using a co-extrusion die, disclosed in, for example,

Japanese Examined Patent Publications No. S41-16125, No. S43-23858 and No. S44-29522 and Japanese Unexamined Patent Publication No. S60-185816, and two extruders. A crystalline thermoplastic resin for the formation of the core is melted and kneaded in one extruder, while a polyolefin polymer for the formation of the coat is melted and kneaded in the other extruder. The melted resins in the extruders are fed to the co-extrusion die, combined therein and then co-extruded therefrom in the form of a strand having a core-sheath structure in which a core of the crystalline thermoplastic resin in an unexpanded state is surrounded by a coat of the polyolefin polymer in an unexpanded state. The strand is subsequently severed with a cutter and its associated take-up rollers for running the strand at a desired speed to obtain the resin particles each having a desired size or weight and each composed of unexpanded core and coat.

It is preferred that the thickness of the coat of the resin particles be as thin as possible since pores or cells are hardly formed in the coat when the resin particles are foamed and expanded. However, too small a thickness of the coat is undesirable because the core is not sufficiently covered with the coat. When the thickness of the coat of the resin particles is excessively thick, on the other hand, the expansion of the resin particles results in the formation of cells in the coat, which may cause deterioration of the mechanical properties of the final foam moldings. Therefore, the thickness of the coat of the resin particles in the non-expanded state is preferably 5 to 500 $\mu$m, more preferably 10 to 100 $\mu$m. The thickness of the coat of the expanded beads is preferably 0.1 to 200 $\mu$m, more preferably 0.5 to 50 $\mu$m. As described previously, the coat of the expanded beads is in substantially unexpanded state.

In the above co-extrusion process, it is possible to incorporate a blowing agent in the melt of the crystalline thermoplastic resin for the formation of the core, if desired. When such a melt is fed to the co-extrusion die and co-extruded with the melt of the polyolefin polymer through the die, the strand has a core-sheath structure in which the core in an expanded state is covered with the coat in a substantially unexpanded state.

The average weight of one resin particle is 0.1 to 20 mg, preferably 0.2 to 10 mg. The resin particles are preferably small in variation of the weight thereof, since it is easy to produce expanded beads therefrom and since the expanded beads obtained have also small variation in bulk density per one expanded bead and can be efficiently filled in a mold cavity.

The resin particles are then foamed and expanded preferably by a method in which a physical blowing agent is impregnated in the resin particles as disclosed in Japanese Examined Patent Publications No. S49-2183 and No. S56-1344 and German Publications No. 1,285,722A and No. 2,107,683A. The physical blowing agent may be an inorganic physical blowing agent such as nitrogen, air or carbon dioxide or an organic physical blowing agent such as an aliphatic hydrocarbon, e.g. butane, pentane, hexane or heptane or a halogenated hydrocarbon, e.g. trichlorofluoromethane, dichlorodifluoromethane, tetrachlorodifluoroethane, dichloromethane, difluoroethane or tetrafluoroethane. These blowing agents may be used singly or in the form of a mixture of two or more thereof.

One preferred method for producing expanded beads using the physical blowing agent includes charging the composite resin particles together with a dispersing medium and the blowing agent in an autoclave provided with a discharging port to obtain a dispersion. The dispersion is then heated to a temperature higher than the softening point of the crystalline thermoplastic resin of the core of the resin particles to impregnate the resin particles with the blowing agent. The resulting dispersion is discharged from the autoclave through the discharging port into a lower pressure atmosphere to foam and expand the resin particles. The thus obtained expanded beads are then dried.

The dispersing medium is preferably water, an alcohol or an aqueous medium containing an alcohol or a polyol. For the purpose of uniformly dispersing the composite resin particles in the dispersing medium, a dispersing agent such as an inorganic substance sparingly soluble in water, e.g. aluminum oxide, tricalcium phosphate, magnesium pyrophosphate, zinc oxide or kaolin; a water-soluble protective colloid, e.g. polyvinyl pyrrolidone, polyvinyl alcohol or methyl cellulose; or an anionic surfactant, e.g. sodium dodecylbenzenesulfonate or sodium alkanesulfonate may be added to the dispersing medium. These dispersing agents may be used singly or as a mixture of two or more thereof.

When the dispersion is discharged into a low pressure atmosphere, it is preferred that a pressurized gas, which may be the same as the physical blowing agent used, be fed to the autoclave to keep the pressure within the autoclave constant for reasons that the resin particles can be easily discharged from the autoclave.

The expanded beads used for forming foamed moldings according to the present invention preferably show two or more endothermic peaks in a DSC curve thereof obtained by the heat flux differential scanning calorimetric analysis in which 2-4 mg of expanded bead samples are heated from ambient temperature (20-45°C) to 220°C at a heating rate of 10°C/minute. The DSC curve shows such two or more endothermic peaks, when the propylene resin constituting the core contains crystals showing an intrinsic endothermic peak and crystals showing an endothermic peak on a higher side of the intrinsic peak. The expanded beads showing two or more endothermic peaks in a DSC curve thereof have excellent secondary expansion properties and give foamed moldings having excellent mechanical strengths and appearance. Such expanded beads may be obtained by controlling the expansion conditions, such as temperature, pressure and time, under which the resin particles contained in the autoclave are heated therein and discharged therefrom, as described in, for example, Japanese Unexamined Patent Publication No. 2002-200635.

The expanded beads used for the production of the foam molding generally has a bulk density of 8 to 450 g/L, preferably 10 to 300 g/L, most preferably 12 to 30 g/L. As used herein, the bulk density of the expanded beads is as

measured by the following method. Expanded beads are arbitrarily sampled just before molding and placed in a chamber maintained at 23°C and 50 % relative humidity in the atmospheric pressure. The beads are fed, while removing static electricity thereof, to a 1 liter graduation cylinder until the upper level of the beads in the cylinder arrives at the graduation of 1 liter. The beads in the cylinder are then weighed to determine the bulk density.

The thick foam molding according to the present invention is obtainable by filling the above-described expanded thermoplastic resin beads in a mold cavity, the filled beads being then heated with steam and fuse-bonded together.

The mold cavity has a size sufficient to form such a thick foam molding that a sphere having a diameter of at least 200 mm can be formed by cutting the foam molding.

The steam for heating the expanded beads in the mold cavity has a pressure sufficient to inflate and fuse-bond the expanded particles together. The steam pressure varies with the kind of the thermoplastic resin, the calorific value of the high temperature endothermic peak, the bulk density and inside pressure of the expanded beads. But, in general, is a saturated pressure providing the steam temperature of between (Tm - 30)°C and (Tm + 10)°C, preferably between (Tm - 21)°C and (Tm)°C, more preferably between (Tm - 21)°C and (Tm - 5)°C, where Tm is the melting point of the thermoplastic resin constituting the core of the expanded beads.

It is preferred that the heating of the expanded beads in the mold cavity comprise preheating the beads with steam at a first pressure while suppressing the inflation of the expanded beads, and then fully heating the beads with steam at a second pressure to fuse and bond said beads together, the first pressure being lower by at least 0.05 MPa than the second pressure. By performing the preheating, the air remaining between the expanded beads is purged and substituted by steam and, at the same time, the expanded beads are heated to a temperature sufficient to cause fusion-bonding thereof without causing the inflation thereof. By the subsequent full heating with higher pressure steam, the expanded beads are inflated to obtain the foam molding. Thus, even though the foam molding is thick, the expanded beads in the central region are fuse-bonded with high fusion-bonding efficiency. For example, it is possible to obtain a foam molding in the form of a cube or a rectangular parallelepiped which has an apparent density of 28 g/L to 10 g/L and a smallest of the three distance between opposing surfaces thereof being 300 mm to 1,000 mm and which shows satisfactory fusion-bonding efficiency not only in an outer region but also in the central region thereof.

The first pressure of steam used in the preheating step is preferably lower by 0.05 to 0.3 MPa than the second pressure used in the full heating step and is preferably 0.01 MPa(G) or more, more preferably 0.02 MPa(G) or more. The first and second pressures herein are measured with a pressure gauge connected to a drain pipe extending between a steam feeding-side chamber and a drain valve at a position immediately upstream of the drain valve.

The foam molding of the present invention generally has an apparent density of lower than 30 g/L but not lower than 10 g/L, more preferably 10 to 28 g/L. When a foam molding having an apparent density of lower than 30 g/L is produced, it is generally unavoidable to use expanded beads which have been treated to increase the inside pressure thereof. Hitherto, the fusion-bonding efficiency in a central region of a thick foam molding has been quite unsatisfactory when expanded beads having an increased inside pressure are used. In contrast, with the process for the production of a thick foam molding according to the present invention in which expanded thermoplastic beads having the above-described specific structure are used, the foam molding having an apparent density of lower than 30 g/L and having satisfactory fusion-bonding efficiency even in a central region can be obtained even when the expanded beads used have an increased inside pressure. The process of the present invention is thus particularly effective for the production of a thick foam molding having an apparent density of less than 30 g/L and good fusion-bonding efficiency even in a central region thereof, using expanded beads having an increased inside pressure. The expanded beads preferably have an inside pressure of 0.005 to 0.98 MPa(G), more preferably 0.05 to 0.5 MPa (G).

As used herein, the apparent density of a foam molding is intended to refer to an apparent whole density as defined in JIS K7222(1999). The inside pressure of expanded beads may be determined by a method disclosed in Japanese Unexamined Patent Publication No. 2003-201361.

Various in-mold molding methods may be adopted for the production of the foam molding of the present invention. Examples of the molding method include a method as disclosed in Japanese Examined Patent Publication No. S46-38359 which comprises the steps of filling expanded beads in a mold cavity defined between a pair of male and female molds and maintained under a reduced pressure or ambient pressure, compressing the expanded beads by reducing the volume of the mold cavity by 5 to 70 %, and feeding a heating medium such as steam to the mold cavity to heat and fuse-bond the compressed expanded beads; a method as disclosed in Japanese Examined Patent Publication No. S51-22951 which comprises the steps of impregnating expanded beads with a physical blowing agent to increase the inside pressure thereof, filling the resulting expanded beads in a mold cavity, and feeding steam to the mold cavity to fuse-bond the expanded beads together; a method as disclosed in Japanese Examined Patent Publication No. H04-46217 which comprises the steps of pressurizing a mold cavity with a compressed gas to a pressure higher than the atmospheric pressure, charging expanded beads into the pressurized mold cavity by compressing the expanded beads at a pressure higher than the pressure inside the mold cavity, and feeding steam to the mold cavity to fuse-bond the expanded beads together; a method as disclosed in Japanese Unexamined Patent Publication No. H09-104026 which comprises the steps of feeding expanded beads between upper and lower running endless belts, and transferring

the expanded beads in a heating zone where they are heated with steam and fuse-bonded together; and a method as disclosed in Japanese Examined Patent Publication No. H06-22919 in which the above methods are suitably combined.

Depending upon the kind and apparent density of the crystalline thermoplastic resin from which the core of the expanded beads is formed, the thus obtained foam molding occasionally starts shrinking after having been taken out of the mold cavity. In such a case, the foam molding as obtained may be aged in an atmosphere having a temperature of 50 to 85°C. By such an aging treatment, the foam molding can recover substantially the same size as that of the mold cavity.

The foam molding obtainable by molding the above-described specific expanded thermoplastic resin beads in a mold cavity has a fusion-bonding efficiency of at least 50 %, preferably at least 60 %, more preferably at least 70 %, in central region thereof. As a consequence of such satisfactory fuse-bonding between the beads in a central region thereof as well as in an outer region thereof, the foam molding can be sliced or cut without causing cracks or breakage of the cut products or debonding of the beads. Further, when the foam molding is used as such and when a great local load or a bending force is applied thereto, breakage of the foam molding hardly occurs.

A method of measuring the fusion-bonding efficiency of the foam molding according to the present invention will be described below with reference to FIGS. 3(a) and 3(b).

Since the fusion-bonding between expanded beads of a thick foam molding is generally lower in a central region as compared with an outer region, the fusion-bonding efficiency is to be measured in a central region thereof. When the central region has a fusion-bonding efficiency of at least 50 %, then the foam molding is regarded as having a fusion-bonding efficiency of at least 50 % throughout.

A foam molding to be measured for its fusion-bonding efficiency is dried and then placed in a room maintained at a temperature of 23°C and a relative humidity of 50 % under the atmospheric pressure for 120 hours. In the room maintained under those conditions, the following procedures are carried out. First, a test piece having a thickness of 25 mm, a length of 180 mm and a width of 50 mm is cut out from the foam molding. The test piece should be sampled from the central region of the foam molding. In the case of the foam molding in a cubic or rectangular parallelepiped shape, for example, the test piece is cut out therefrom so that the center of the foam molding is included in the test piece. In general, the test piece is sampled from the foam molding such that the center of gravity of the test piece substantially coincides with the center of the biggest sphere which is the greatest in diameter of all the spheres obtainable from the foam molding by cutting. The term "substantially coincide" is intended to mean that an offsetting of 20 mm or less is allowable.

As shown in FIGS. 3(a) and 3(b), a transversely extending incision 5 having a depth of 2 mm is formed in one of the two surfaces, each having a size of 180 mm x 50 mm, of the test piece 1 along a line bisecting that surface. The test piece 1 is then horizontally rested, with its incision 5 facing downward, on a pair of parallel, spaced apart support plates 2 and 2 vertically extending from and fixedly planted on a base 4. In this case, the test piece 1 is disposed such that the incision 5 thereof extends in parallel with the support plates 2 and 2 and coincides the centerline between the support plates 2 and 2. The support plates 2 and 2 are spaced apart a distance of 70 mm and each have a height of 100 mm, a width of 60 mm and a thickness of 10 mm. The top end of each support plate 2 is rounded to have a radius of 5 mm.

Next, the test piece 1 supported on the support plates 2 and 2 is subjected to a three-point bending test using a pushing plate 3 of a rigid material which has a height of 60 mm, a width of 60 mm and a thickness of 10 mm and which is positioned in parallel with the support plates 2 and 2. The pushing plate 3 has a lower end rounded to have a radius of 5 mm and is disposed above the test piece 1 at a position so that the incision 5 lies in the plane bisecting the thickness of the pushing plate 3. In the bending test, the pushing plate 3 is displaced downward at a rate of 200 mm/min until the test piece 1 is completely ruptured or until the test piece 1 is disengaged from the support plates 2 and 2 and is forced to enter completely the space between the support plates 2 and 2.

Then, the ruptured surface of the test piece is observed to count the number (GN) of the expanded beads destroyed by the rupture (intra-bead separation) and the number (PN) of the expanded beads separated without destruction thereof (inter-bead separation). In this case, the expanded beads in which the incision 5 is present are disregarded and are not counted for GN or PN. Whether a given expanded bead appearing on the ruptured surface is destroyed (intra-bead separation) or merely separated (inter-bead separation) is determined on the basis of the areas thereof. When the area of the destroyed portions in the given expanded bead is 50 % or more of the total area of thereof, then the given expanded bead is regarded as being a destroyed bead and is counted as GN. On the other hand, when the area of the destroyed portions in the given expanded bead is less than 50 % of the total area of thereof, then the given expanded bead is regarded as being a separated bead and is counted as PN. The fusion-bonding efficiency BR (%) is calculated according to the following formula:

$$BR = GN/(GN + PN) \times 100.$$

When the test piece is not completely ruptured but is forced to enter the space between the support plates 2 and 2, the unruptured portion is severed with a knife along the incision 5. The severed surface is observed to count the number (GN1) of the expanded beads present on the surface. When the test piece is partly ruptured, the ruptured portion is observed to count the number (GN2) of the expanded beads destroyed by the rupture and the number (PN) of the expanded beads separated without destruction thereof. The fusion-bonding efficiency BR (%) is calculated according to the following formula:

$$BR = (GN1 + GN2)/(GN1 + GN2 + PN) \times 100.$$

For use as a raw material for the production of plates, the foam molding according to the present invention is preferably in the form of a cube or a rectangular parallelepiped having an apparent density of smaller than 30 g/L but not smaller than 10 g/L, more preferably 10 to 28 g/L, and such a size that the smallest of the three distances between opposing surfaces thereof is 300 mm to 1,000 mm, more preferably 400 to 600 mm. Such a foam molding may be easily sliced into a plurality of plates. The plates may be used for various applications such as cushioning plates or heat insulating plates as such or after having been further cut or punched into desired shapes.

The following examples and comparative examples will further illustrate the present invention.

<u>Production of Polypropylene Resins</u>:

Preparation Example 1

(i) Synthesis of dimethylsilylenebis{1,1'-(2-methyl-4-phenyl-4-hydroazulenyl))zirconium dichloride

The following reactions were performed in an inert gas atmosphere and the solvents used in the following reactions had been previously dried and refined.

(a) Synthesis of racemic-meso mixture

In 30 mL of hexane were dissolved 2.22 g of 2-methylazulene prepared in accordance with the method disclosed in Japanese Unexamined Patent Publication No. S62-207232, to which 15.6 mL (1.0 equivalent) of a solution of phenyl lithium in a cyclohexane-diethyl ether mixed solvent were added little by little. The resulting solution was stirred at room temperature for 1 hour and then cooled to -78°C, to which 30 mL of tetrahydrofuran were added.

To the resulting solution 0.95 mL of dimethyldichlorosilane was added. The mixture was heated to room temperature and further, heating was carried out at 50°C for 90 minutes. Thereafter, an aqueous saturated ammonium chloride solution was added to the reaction mixture, from which an organic phase was separated and then dried over by using anhydrous sodium sulfate. The solvent was then removed by vacuum distillation.

The crude product thus obtained was purified by silica gel column chromatography (developing solvent: hexane/dichloromethane (=5/1 weight ratio)) to obtain 1.48 g of bis{1,1'-(2-methyl-4-phenyl-1,4-dihydroazulenyl)}-dimethylsilane.

In 15 mL of diethyl ether, 786 mg of the thus obtained bis{1,1'-(2-methyl-4-phenyl-1,4-dihydroazulenyl)}dimethylsilane were dissolved, to which 1.98 mL of a solution of n-butyl lithium in hexane (1.68 mol/L) were added dropwise at -78°C. The temperature was gradually raised to room temperature and the mixture was stirred for 12 hours at room temperature. The solvent was then removed by vacuum distillation and the solids thus obtained were washed with hexane and dried under vacuum.

The thus obtained solids were added to 20 mL of a toluene/diethyl ether (=40/1 weight ratio) mixed solvent, to which 325 mg of zirconium tetrachloride were added at -60°C. The mixture was gradually returned to room temperature and thereafter stirred at room temperature for 15 minutes to obtain a solution. The solution was concentrated under vacuum, to which hexane was added to precipitate a racemic-meso mixture (150 mg) of dimethylsilylenebis{1,1'-(2-methyl-4-phenyl-4-hydroazulenyl)}zirconium dichloride.

(b) Separation of racemic body

The racemic-meso mixture (887 mg) obtained by repeating the above synthesis (a) was placed in a glass vessel and dissolved in 30 mL of dichloromethane. The solution was irradiated with a high pressure mercury lamp for 30 minutes. The dichloromethane was then removed by vacuum distillation to obtain yellow solids. Toluene (7 mL) was added to the solids and the mixture was stirred and then allowed to quiescently stand to precipitate yellow solids. After the removal of the supernatant, the solids were dried under vacuum to obtain 437 mg of a racemic body of dimethylsilylenebis{1,1'-(2-methyl-4-phenyl-4-hydroazulenyl))zirconium dichloride.

(ii) Synthesis of catalyst

(a) Treatment of catalyst carrier

Magnesium sulfate (16 g) was placed in a glass vessel together with 135 mL of desalted water and the mixture was stirred to obtain a solution. Next, 22.2 g of montmorillonite (KUNIPIA F (trade name) manufactured by KUNIMINE INDUSTRIES CO., LTD.) were added to the solution and the mixture was heated to 80°C and maintained at that temperature for 1 hour. Thereafter, the resulting mixture was mixed with 300 mL of desalted water and solids were separated by filtration. The solids were mixed with 46 mL of desalted water, 23.4 g of sulfuric acid and 29.2 g of magnesium sulfate. The mixture was then heated and refluxed for 2 hours. The reaction mixture was dispersed in 200 mL of desalted water and then filtered. The solids were further washed twice by being dispersed with 400 mL of desalted water and filtration. The washed solids were dried at 100°C to obtain chemically treated montmorillonite as a catalyst carrier.

(b) Preparation of catalyst component

To an autoclave having an inside volume of 1 L and equipped with a stirrer was fed propylene for thoroughly substituting the inside atmosphere therewith. Then 230 mL of dehydrated heptane was fed to the autoclave and the temperature inside the autoclave was maintained at 40°C. The chemically treated montmorillonite obtained above (10 g) as a catalyst carrier was suspended in 200 mL of toluene and the suspension was added to the above autoclave.

The racemic body of dimethylsilylenebis{1,1'-(2-methyl-4-phenyl-4-hydroazulenyl)}zirconium dichloride (0.15 mmol) prepared in (i)(b) above and triisobutylaluminum (3 mmol) were mixed in toluene to obtain a mixture (20 mL). The mixture was then added to the above autoclave.

Next, propylene was fed to the autoclave at a rate of 10 g/hr for 120 minutes. The reaction mixture in the autoclave was further reacted for another 120 minutes. Thereafter, the solvent was removed by distillation under a nitrogen atmosphere till dryness to obtain a solid catalyst component. The solid catalyst component was found to contain 1.9 g of polypropylene per 1 g of a total amount of the carrier, racemic body and triisobutylaluminum.

(iii) Preparation of propylene resin

To an autoclave having an inside volume of 200 L and equipped with a stirrer was fed propylene for thoroughly substituting the inside atmosphere therewith. Then, 60 L of purified n-heptane and 500 mL of a solution of triisobutylaluminum (0.12 mol) in hexane were charged in the autoclave and the temperature inside the autoclave was raised to 70°C. Next, 9.0 g of the above solid catalyst component were added to the autoclave, into which a mixed gas containing propylene and ethylene (having a propylene/ethylene weight ratio of 97.5:2.5) was introduced such that the pressure of 0.7 MPa was reached, thereby to start the polymerization to proceed. The polymerization was carried out for 3 hours under the above conditions.

Thereafter, 100 mL of ethanol was added to the reaction system under a pressure to stop the reaction. The remaining gas components were purged to obtain 9.3 kg of a polypropylene resin (propylene-ethylene random copolymer) having MFR of 8 g/10 min., a propylene structural unit content of 97.6 mole %, an ethylene structural unit content of 2.4 mole %, an isotactic triad fraction of 99.2 %, a melting point Tm of 141°C, a proportion of position irregular units attributed to 2,1-insertion of 1.06 % and a proportion of position irregular units attributed to 1,3-insertion of 0.17 %. The polypropylene resin will be hereinafter referred to as Polymer 1.

Preparation Example 2

To an autoclave having an inside volume of 200 L and equipped with a stirrer was fed propylene for thoroughly substituting the inside atmosphere therewith. Then, 60 L of purified n-heptane and 500 mL of a solution of triisobutylaluminum (0.12 mol) in hexane were charged in the autoclave and the temperature inside the autoclave was raised to 70°C. Next, 6.0 g of the same solid catalyst component as used in Preparation Example 1 were added to the autoclave, into which a mixed gas containing propylene and ethylene (having a propylene/ethylene weight ratio of 96.5:3.5) was introduced such that the pressure of 0.7 MPa was reached, thereby to start the polymerization to proceed. The polymerization was carried out for 3 hours under the above conditions.

Thereafter, 100 mL of ethanol was added to the reaction system under a pressure to stop the reaction. The remaining gas components were purged to obtain 8.8 kg of a polypropylene resin (propylene-ethylene random copolymer) having MFR of 8 g/10 min., a polypropylene structural unit content of 95.3 mole %, an ethylene structural unit content of 4.7 mole %, an isotactic triad fraction of 99.2 %, a melting point Tm of 125°C, a proportion of position irregular units

attributed to 2,1-insertion of 0.95 % and a proportion of position irregular units attributed to 1,3-insertion of 0.11 %. The polypropylene resin will be hereinafter referred to as Polymer 2.

Polypropylene Resins Produced Using Ziegler Catalyst:

A propylene-butene-1 random copolymer (NOVATEC PP MB3B (trade name) manufactured by Japan Polychem Corporation) prepared using a Ziegler type catalyst was provided. This polypropylene resin will be hereinafter referred to as Polymer 3. Also provided was a propylene-ethylene random copolymer (J532MZV (trade name) manufactured by Idemitsu Petrochemical Co., Ltd.) prepared using a Ziegler type catalyst. This polypropylene resin will be hereinafter referred to as Polymer 4.
Properties of Polymers 1 to 4 are summarized in Table 1.

Table 1

| Polypropylene Resin | | Polymer 1 | Polymer 2 | Polymer 3 | Polymer 4 |
|---|---|---|---|---|---|
| Composition of Polymer | Propylene (mol %) | 97.6 | 95.3 | 94.0 | 97.2 |
| | Ethylene (mol %) | 2.4 | 4.7 | 0 | 2.8 |
| | Butene-1 (mol %) | 0 | 0 | 6.0 | 0 |
| Proportion of Position Irregular Units | 2,1-Insertion | 1.06 | 0.95 | 0 | 0 |
| | 1,3-Insertion | 0.17 | 0.11 | 0 | 0 |
| Melting Point Tm (°C) | | 141 | 125 | 148 | 143 |
| Water Vapor Permeability (g/m$^2$/24hr) | | 12.0 | 16.8 | 11.9 | 15.8 |
| [mm] fraction (%) | | 99.2 | 99.2 | 96.5 | 96.4 |
| MFR (g/10 min) | | 8 | 8 | 8 | 6 |

Preparation of Expanded Beads and Foam Moldings:

In Examples and Comparative Examples shown below, expanded beads were prepared using Polymers 1 to 4 obtained above and foam moldings were prepared using the expanded beads. In these examples, the melting point is measured using a heat flux differential scanning calorimeter (DSC-50 (trade name) manufactured by Shimadzu Corporation) in a manner as described above. Water vapor permeability is measured in a manner as described above for films of 25 μm thick prepared from Polymers 1 to 4.

Example 1

Polymer 1 obtained in Preparation Example 1 and an antioxidant (0.05 % by weight of YOSHINOX BHT (trade name) manufactured by Yoshitomi Pharmaceutical Co., Ltd. and 0.10 % by weight of IRGANOX 1010 (trade name) manufactured by Ciba-Geigy Corporation) were kneaded at 230°C in a single-screw extruder having an inside diameter of 65 mm and the kneaded mixture was fed to a core nozzle of a co-extrusion die at a pressure of 150 kg/cm$^2$ so that an extrusion rate of 46 kg/hr was obtained.
On the other hand, a linear low density polyethylene (KERNEL KF270 (trade name) manufactured by Japan Polychem Corporation) having a density of 0.907 g/cm$^3$ and a melting point of 100°C and an antioxidant (0.05 % by weight of YOSHINOX BHT (trade name) manufactured by Yoshitomi Pharmaceutical Co., Ltd. and 0.10 % by weight of IRGANOX 1010 (trade name) manufactured by Ciba-Geigy Corporation) were kneaded at 220°C in a single-screw extruder having an inside diameter of 30 mm and the kneaded mixture was fed to a coat nozzle of the above co-extrusion die at a pressure of 130 kg/cm$^2$ so that an extrusion rate of 8 kg/hr was obtained.
Then, the kneaded mixtures were extruded from a die orifice having a diameter of 1.5 mm in the form of a strand having a core formed from the kneaded mixture of Polymer 1 and the antioxidant and a coat or sheath surrounding the core and formed from the kneaded mixture of the linear low density polyethylene and the antioxidant. The core and sheath were each in an unexpanded state.
The strand was passed through a water-containing vessel and the cooled strand was cut to obtain composite resin particles having a weight of 1.0 mg per one particle. Observation by a phase-contrast microscope of the resin particles revealed that the core of the polypropylene resin in an unexpanded state was covered with the coat of the linear low density polyethylene having a thickness of 47 μm.

The thus obtained composite resin beads (1000 g) were charged in an autoclave having an inside volume of 5 liters together with 2500 g of water, 200 g of an aqueous dispersion containing 10 % by weight of tricalcium phosphate and 30 g of aqueous solution containing 2 % by weight of sodium dodecylbenzenesulfonate, to which isobutane was added in an amount shown in Table 2. The contents in the autoclave was then heated to an expansion temperature shown in Table 2 over a period of 60 minutes and maintained at that temperature for 30 minutes.

Thereafter, while feeding compressed nitrogen gas to the autoclave to maintain the pressure inside the autoclave at an expansion pressure shown in Table 2, a valve connected to a bottom of the autoclave was opened to discharge the contents in the autoclave into the atmosphere at ambient temperature, thereby obtaining expanded beads. The expanded beads after drying were found to have a bulk density of 18 g/L and an average cell diameter of 190 $\mu$m. The cells were very uniform in size.

The average cell diameter of the expanded beads are measured as follows. An expanded bead is arbitrarily selected and cut along a plane passing through near the center of the bead. The cut surface is observed by a microscope and the image is formed on a photograph or a display. The largest diameter of arbitrarily selected 50 cells are measured. The arithmetic mean of the 50 measured diameters represent the average cell diameter.

The expanded beads thus obtained were then molded in a mold as illustrated in FIG. 1 to obtain a foam molding. FIGS. 2(a) to 2(e) are explanatory views of the steam flows in the mold of FIG. 1 during the molding process. In FIGS. 2(a) to 2(e), the arrows of the solid line show the directions along which steam is fed to and discharged from the mold, while the arrows of the dotted line show the flow directions of steam within the mold. The foam molding was produced as follows.

First, the expanded beads obtained above were placed in a pressurized atmosphere at a temperature of 23°C and a gauge pressure of 0.5 MPa(G) to impregnate the beads with the pressurized air and to increase the inside pressure of the beads. The expanded beads having an increased inside pressure as shown in Table 2 were filled in a mold cavity E (having a length of 2,000 mm, a width of 1,000 mm and a thickness of 500 mm) of a mold having chambers A, B and C, drain valves D1, D2 and D3 and steam feed valves S1, S2 and S3 as illustrated in FIG. 1.

Then, as shown in FIG. 2(a), all drain valves D1, D2 and D3 were opened and all steam feed valves S1, S2 and S3 were opened to feed steam to the chambers A, B and C for 5 seconds. Thus, air in the mold cavity (interstices between the expanded beads) and chambers A, B and C were substituted with steam (initial deaeration step).

Next, as shown in FIG. 2(b), the drain valve D1 was closed while the drain valves D2 and D3 were kept opened. By opening only the steam feed valve S1, steam having a pressure shown in Table 2 was permitted to flow from the chamber A to chambers B and C for a period of time as shown in Table 2 so that the interstices between the beads were further deaerated and the beads were preheated (Preheating Step 1).

Immediately thereafter, as shown in FIG. 2(c), the drain valve D3 was closed, D1 was opened and D2 was kept opened. By opening only the steam feed valve S3, steam having a pressure shown in Table 2 was permitted to flow from the chamber B to chambers A and C for a period of time as shown in Table 2 so that the interstices between the beads were further deaerated and the beads were further preheated (Preheating Step 2).

Immediately thereafter, as shown in FIG. 2(d), the drain valve D2 was closed, D3 was opened and D1 was kept opened. By opening only the steam feed valve S2, steam having a pressure shown in Table 2 was permitted to flow from the chamber C to chambers A and B for a period of time as shown in Table 2 so that the interstices between the beads were further deaerated and the beads were further preheated (Preheating Step 3).

Immediately thereafter, as shown in FIG. 2(e), all the drain valves D1, D2 and D3 were closed, while all the steam feed valves S1, S2 and S3 were opened to feed steam having a pressure shown in Table 2 to the mold cavity for a period of time as shown in Table 2 so that the expanded beads were inflated and fuse-bonded together (Full Heating Step). The steam pressure used in Preheating Steps 1 to 3 was lower by 0.1MPa than that in Full Heating Step.

The mold was then cooled with water for a period of time as shown in Table 2. The foam molding was taken out of the mold cavity, immediately transferred to a chamber at 70°C and then allowed to stand in the chamber for 24 hours for drying and for shape recovery. The foam molding was subsequently placed in a chamber at 23°C under a relative humidity of 50 % for 5 days to complete aging.

The foam molding obtained after the aging was found to have an apparent density of 20 g/L, a shrinkage of 2.5 % based on the dimension of the mold cavity and a fusion-bonding efficiency of 90 % in the central region thereof, as shown in Table 2. The foam molding had an outer surface in which only a small number of gaps were present between expanded beads. No undulations were found on the whole outer surface and the foam molding had an excellent appearance. In Table 2, the evaluation result for appearance is shown. The evaluation is rated as follows:

A: Foam molding has a smooth surface and gaps between expanded beads on the surface are not present or inconspicuous

B: Foam molding has a smooth surface but gaps between expanded beads on the surface are conspicuous

C: Foam molding lacks surface smoothness and gaps between expanded beads on the surface are conspicuous

The conditions for the production of the expanded beads, properties of the expanded beads, molding conditions and properties of the foam molding are summarized in Table 2.

Examples 2 to 4

In Example 2, resin particles were produced in the same manner as described in Example 1 except that Polymer 1 for forming the core was substituted with Polymer 2. In Example 3, resin particles were produced in the same manner as described in Example 1 except that Polymer 1 was substituted for Polymer 3. Then, expanded beads were produced using the thus obtained resin particles in the same manner as described in Example 1 except that the conditions of the production as shown in Table 2. Next, using the thus obtained expanded beads, a foam molding was produced in the same manner as described in Example 1 except that the conditions of the heating with steam were changed as shown in Table 2. In Example 4, a foam molding was produced using the expanded beads obtained in Example 2 in the same manner as described in Example 2 except that the steam pressure used in Preheating Steps 1 to 3 was the same as that of Full Heating Step. The conditions for the production of the expanded beads, properties of the expanded beads, molding conditions and properties of the foam molding are summarized in Table 2.

Example 5

In Example 5, resin particles were produced in the same manner as described in Example 1 except that Polymer 1 for forming the core was substituted with Polymer 4. Then, expanded beads were produced using the thus obtained resin particles in the same manner as described in Example 1 except that the conditions of the production as shown in Table 2. Next, using the thus obtained expanded beads, a foam molding was produced in the same manner as described in Example 1 except that the conditions of the heating with steam were changed as shown in Table 2. The conditions for the production of the expanded beads, properties of the expanded beads, molding conditions and properties of the foam molding in Example 5 are summarized in Table 2.

Comparative Examples 1 to 3

In Comparative Example 1, expanded beads were produced in the same manner as described in Example 1 except that the linear low density polyethylene for forming the coat was substituted with a high density polyethylene (NOVATEC HD HY540 (trade name) manufactured by Japan Polychem Corporation). Thus, in Comparative Example 1, the difference between the melting point of the core and the coat was 6°C and less than 15°C. Using the thus obtained expanded beads, foam moldings were produced in the same manner as described in Example 1 except that the conditions of the heating with steam were changed as shown in Table 3.
In Comparative Examples 2 and 3, expanded polypropylene resin beads having no coat were prepared and foam moldings were produced using the thus obtained expanded beads.
First, Polymer 1 (Comparative Example 2) or Polymer 3 (Comparative Example 3) was kneaded in a in a single-screw extruder having an inside diameter of 30 mm and extruded in the form of a strand. The strand was cut to obtain resin particles having a weight of 1.0 mg per one particle. The thus obtained resin beads (1,000 g) were charged in an autoclave having an inside volume of 5 liters together with 3,000 g of water, 200 g of an aqueous dispersion containing 10 % by weight of tricalcium phosphate and 25 g of aqueous solution containing 2 % by weight of sodium dodecylbenzenesulfonate, to which isobutane was added in an amount shown in Table 3. The contents in the autoclave was then heated to an expansion temperature shown in Table 3 over a period of 60 minutes and maintained at that temperature for 30 minutes. Thereafter, while feeding compressed nitrogen gas to the autoclave to maintain the pressure inside the autoclave at an expansion pressure shown in Table 3, a valve connected to a bottom of the autoclave was opened to discharge the contents in the autoclave into the atmosphere at ambient temperature, thereby obtaining expanded beads. Next, using the thus obtained expanded beads, foam moldings were produced in the same manner as described in Example 1 except that the conditions of the heating with steam were changed as shown in Table 3.
The conditions for the production of the expanded beads, properties of the expanded beads, molding conditions and properties of the foam molding in Comparative Examples 1 to 3 are summarized in Table 3.

Table 2

| Example No. | | 1 | 2 | 3 | 4 | 5 |
|---|---|---|---|---|---|---|
| Core | Polymer | 1 | 2 | 3 | 2 | 4 |
| | Melting point(°C) | 141 | 125 | 148 | 125 | 143 |

(continued)

| Example No. | | 1 | 2 | 3 | 4 | 5 |
|---|---|---|---|---|---|---|
| Coat | Resin | LLDPE | LLDPE | LLDPE | LLDPE | LLDPE |
| | Density (g/cm$^3$) | 0.907 | 0.907 | 0.907 | 0.907 | 0.907 |
| | Melting point(°C) | 100 | 100 | 100 | 100 | 100 |
| | Vicat S.P. (°C) | 88 | 88 | 88 | 88 | 88 |
| | Thickness of coat (μm) | 30 | 30 | 30 | 30 | 30 |
| | Weight % of coat *1 | 15 | 15 | 15 | 15 | 15 |
| Average weight of one expanded bead (mg) *2 | | 1.0 | 1.0 | 1.0 | 1.0 | 1.0 |
| Amount of isobutane (g) | | 200 | 220 | 200 | 220 | 200 |
| Expansion temperature(°C) | | 127 | 113 | 138 | 113 | 128 |
| Expansion pressure(MPa)(G) | | 2.0 | 1.8 | 2.0 | 1.8 | 2.2 |
| Bulk density of expanded beads (g/L) | | 18 | 15 | 18 | 15 | 18 |
| Average cell diameter (μm) | | 190 | 200 | 190 | 200 | 240 |
| Thickness of coat of expanded bead (μm) | | 5 | 4 | 5 | 4 | 5 |
| Inside pressure of expanded bead (MPa)(G) | | 0.2 | 0.2 | 0.2 | 0.2 | 0.2 |
| Steam feed time in initial deaeration step (second) | | 5 | 5 | 5 | 5 | 5 |
| Steam pressure in Preheating Steps 1 to 3(MPa)(G) | | 0.05 | 0.05 | 0.05 | 0.10 | 0.10 |
| Heating time in Preheating Steps 1 to 3 (second) | | 10 | 10 | 10 | 10 | 10 |
| Steam pressure in Full Heating Step (MPa)(G) | | 0.15 | 0.10 | 0.25 | 0.10 | 0.20 |
| Heating time in Full Heating Step (second) | | 20 | 20 | 20 | 20 | 20 |
| Water cooling time (second) | | 50 | 40 | 50 | 40 | 50 |
| Apparent density of foam molding (g/L) | | 20 | 17 | 20 | 17 | 20 |
| Appearance of foam molding | | A | A | A | A | A |
| Shrinkage (%) | | 2.5 | 2.5 | 2.5 | 2.7 | 2.7 |
| Fusion-bonding efficiency in central region (%) | | 90 | 80 | 90 | 50 | 80 |
| *1: based on total weight of core and coat<br>*2: arithmetic mean of the weight of 100 arbitrarily selected expanded beads | | | | | | |

Table 3

| Comparative Example No. | | 1 | 2 | 3 |
|---|---|---|---|---|
| Core | Polymer | 1 | 1 | 3 |
| | Melting point (°C) | 141 | 141 | 148 |
| Coat | Resin | HDPE | - | - |
| | Density (g/cm$^3$) | 0.960 | - | - |
| | Melting point (°C) | 135 | - | - |
| | Vicat S.P. (°C) | 128 | - | - |
| | Thickness of ocat (μm) | 47 | - | - |
| | Weight % of coat *1 | 15 | - | - |
| Average weight of one expanded bead (mg) *2 | | 1.0 | 1.0 | 1.0 |

(continued)

| Comparative Example No. | 1 | 2 | 3 |
|---|---|---|---|
| Amount of isobutane (g) | 200 | 190 | 190 |
| Expanded temperature (°C) | 127 | 127 | 138 |
| Expansion pressure (°C) | 2.0 | 1.9 | 1.9 |
| Bulk density of expanded beads (g/L) | 18 | 18 | 18 |
| Average cell diameter (μm) | 200 | 180 | 180 |
| Thickness of coat of expanded bead (μm) | 5 | - | - |
| Inside pressure of expanded bead (MPa) (G) | 0.2 | 0.2 | 0.2 |
| Steam feed time in initial deaeration stem (second) | 5 | 5 | 5 |
| Steam pressure in Preheating Steps 1 to 3 (MPa) (G) | 0.05 | 0.05 | 0.05 |
| Heating time in Preheating Steps 1 to 3 (second) | 10 | 10 | 10 |
| Steam pressure in full Heating Step (second) | 0.20 | 0.30 | 0.35 |
| Heating time in Full Heating Step (Second) | 20 | 20 | 20 |
| Water cooling time (second) | 50 | 50 | 50 |
| Apparent density of foam molding (g/L) | 20 | 20 | 20 |
| Appearance of foam molding | B | A | A |
| Shrinkage (%) | 3.0 | 3.2 | 3.2 |
| Fusion-bonding efficiency in central region (%) | 30 | 0 | 0 |
| *1: based on total weight of core and coat<br>*2: arithmetic mean of the weight of 100 arbitrarily selected expanded beads | | | |

In Examples 1 to 3 and 5, although foam moldings having a thickness of 500 mm and an apparent density of 30 g/L were produced according to the process of the present invention by heating expanded beads with steam in a general-type molding device without specific controlling mechanism, the fusion-bonding efficiency in a central region of each of the foam moldings was in the range of 80 to 90 %, as shown in Table 2. Such a high fusion-bonding efficiency was obtained, because the expanded beads used were each comprised of a core which was in an expanded state and made of a crystalline thermoplastic resin, and a coat which was in a substantially unexpanded state, which surrounded the core and which was made of a crystalline polyolefin polymer having a melting point lower by at least 15°C than that of the crystalline thermoplastic resin. The fact that a high fusion-bonding efficiency in a central region in the range of 80 to 90 % was obtained even when the molding had an apparent density of less than 30 g/L and a thickness of 500 mm was surprising.

While the preheating was carried out in Example 2 using steam having a pressure 0.05 MPa(G) which was lower by 0.05 MPa than that of the full heating step, the same steam pressure (0.10 MPa(G)) was used in the preheating and full heating steps in Example 4. By comparing the results of Example 2 with those of Example 4, it is appreciated that a higher fusion-bonding efficiency in a central region of the molding is attained in the case of Example 2. It was found that in order to obtain a fusion bonding efficiency of 60 % or more at a central region using the molding conditions of Example 4, it was necessary to reduce the thickness of the molding to 300 mm or less. Thus, the preheating of the expanded beads at a steam pressure lower than that in the full heating step gives improved results. The results obtained in Example 4 are inferior to those in Example 2 but are much superior as compared with those of Comparative Examples 1 to 3.

In Comparative Example 1 which is to be compared with Example 1, the difference in melting point between the polyolefin polymer of the coat and the thermoplastic resin of the core is smaller than 15°C. Notwithstanding the preheating is performed in the same manner as that in Example 1, the fusion-bonding efficiency in the central region of the foam molding obtained in Comparative Example 1 is considerably lower than that in Example 1, though the fusion-bonding performance in its outer region is satisfactory. Since foaming and inflation of the expanded beads in an outer region of the molding proceeds earlier than those in an inner region and since the fusion-bonding of the expanded beads in the outer region is completed prior to that of the expanded beads in the inner region, steam cannot sufficiently penetrate into the inner region. Therefore, the foam molding of Comparative Example 1 has poor fusion-bonding efficiency in the

central region thereof.

In Comparative Examples 2 and 3 which are to be compared with Examples 1 and 3, respectively, the expanded beads have not coat. The foam molding obtained using such expanded beads has very poor fusion-bonding efficiency in a central region, i.e. the expanded beads in the central region are not fuse-bonded at all. This result shows superiority of the inventive expanded beads in Examples 1 and 3.

Unlike the polypropylene resins used in Examples 1 and 2, the polypropylene resins used in Examples 3 and 5 do not have specific position irregular units attributed to 2,1-insertion or 1,3-insertion. The results in Examples 3 and 5 indicate that the objects of the present invention can be attained without resorting to the use of such specific polypropylene resins. However, comparison of the results between Examples 1 and 3 indicates that the polypropylene resin having specific proportions of position irregular units attributed to 2,1-insertion and to 1,3-insertion gives better in-mold moldability at low molding temperature even when the difference in melting point is taken into account.

In Examples 1 to 5, initial dearation step and preheating Steps 1 to 3 were carried out. However, initial dearation step and/or preheating steps may be omitted as long as the fusion-bonding efficiency of at least 50 % in a central region of the foam molding is attained. Additionally, each of chambers A to C may be further divided into sections so that steam having different controlled pressures may be fed through the sections for the purpose of improving uniformity in appearance of the outer surface and in fusion-bonding efficiency of inside regions of the foam molding.

## Claims

1. A thick foam molding having a size permitting the formation of a sphere having a diameter of at least 200 mm by cutting, said foam molding being obtainable by molding expanded thermoplastic resin beads in a mold cavity and having a fusion-bonding efficiency of at least 50 % in a central region of the foam molding, wherein said foam molding has an apparent density of smaller than 30 g/L but not smaller than 10 g/L,
   wherein each of said expanded thermoplastic resin beads comprises:

   a core which is in an expanded state and which comprises a crystalline polypropylene resin, and
   a coat which is in a substantially unexpanded state and which surrounds said core, said coat comprising a crystalline polyolefin polymer which is lower in melting point by at least 15°C than that of said crystalline polypropylene resin or a non-crystalline polyolefin polymer which is lower in Vicat softening point by at least 15°C than that of said crystalline polypropylene resin.

2. A thick foam molding as claimed in claim 1, wherein said foam molding is in the form of a cube or a rectangular parallelepiped the smallest of the three
   distances between opposing surfaces thereof being 300 mm to 1,000 mm.

3. A process for preparing a thick foam molding having a size permitting the formation of a sphere having a diameter of at least 200 mm by cutting,
   comprising filling expanded thermoplastic resin beads in a mold cavity, and
   heating said beads in said mold cavity with steam to fuse and bond said beads together, wherein said expanded thermoplastic resin beads have a bulk density of 10 to 300 g/L and an inside pressure of 0.005 to 0.98 MPa(G),
   wherein each of said expanded thermoplastic resin beads comprises:

   a core which is in an expanded state and which comprises a crystalline polypropylene resin, and
   a coat which is in a substantially unexpanded state and which surrounds said core, said coat comprising a crystalline polyolefin polymer which is lower in melting point by at least 15°C than that of said crystalline polypropylene resin or a non-crystalline polyolefin polymer which is lower in Vicat softening point by at least 15°C than that of said crystalline polypropylene resin.

4. A process as claimed in claim 3, wherein said heating of said beads comprises
   preheating said beads with steam at a first pressure,
   and
   heating said beads with steam at a second pressure to fuse and bond said beads together, said first pressure being lower by 0.05 to 0.3 MPa than said second pressure.

**Patentansprüche**

1. Dickes Schaumformteil in einer Größe, die die Bildung einer Sphäre mit einem Durchmesser von mindestens 200 mm durch Schneiden ermöglicht, wobei besagtes Schaumformteil durch Formen expandierter thermoplastischer Harzperlen in einer Formkavität zu erlangen ist, und das eine Schmelzbindungs-Effizienz von mindestens 50 % in einem Zentralbereich des Schaumformteils aufweist, wobei besagtes Schaumformteil eine Rohdichte kleiner als 30 g/L, jedoch nicht kleiner als 10 g/L aufweist, wobei jede der besagten aufgeschäumter thermoplastischen Harzperlen umfasst:

   einen Kern, der sich in einem expandierten Zustand befindet und der ein kristallines Polypropylen-Harz umfasst, und
   eine Beschichtung, die sich in einem im Wesentlichen nicht expandierten Zustand befindet und die besagten Kern umschließt, wobei besagte Beschichtung ein kristallines Polyolefin-Polymer umfasst, welches einen mindestens 15 °C niedrigeren Schmelzpunkt als der des besagten kristallinen Polypropylen-Harzes aufweist, oder ein nicht-kristallines Polyolefin-Polymer,
   welches eine mindestens 15 °C niedrigere Vicat-Erweichungstemperatur als besagtes kristallines Polypropylen-Harz aufweist.

2. Dickes Schaumformteil nach Anspruch 1, wobei besagtes Schaumformteil die Form eines Würfels oder eines rechtwinkligen Parallelepipeds aufweist, wobei die kleinste der drei Distanzen zwischen gegenüberliegenden Seiten zwischen 300 mm und 1.000 mm beträgt.

3. Verfahren zur Herstellung eines dicken Schaumformteils in einer Größe, die die Bildung einer Sphäre mit einem Durchmesser von mindestens 200 mm durch Schneiden ermöglicht, umfassend das Einfüllen expandierter thermoplastischer Harzperlen in eine Formkavität und Erhitzen besagter Perlen in besagter Formkavität mit Dampf, um besagte Perlen zu schmelzen und aneinander zu binden, wobei besagte ausgedehnte thermoplastische Harzperlen eine Fülldichte von 10 bis 300 g/L und einen Innendruck von 0,005 bis 0,98 MPa (G), aufweisen, wobei jede der besagten expandierten thermoplastischen Herzperlen umfasst:

   einen Kern, der sich in einem expandierten Zustand befindet und ein kristallines Polypropylen-Harz umfasst, und eine Beschichtung, die sich in einem im Wesentlichen nicht expandierten Zustand befindet und die besagten Kern umschließt, wobei besagte Beschichtung ein kristallines Polyolefin-Polymer umfasst, dessen Schmelzpunkt um mindestens 15 °C niedriger liegt als der des besagten kristallinen Polypropylen-Harz, oder ein nicht-kristallines Polylefin-Polymer,
   dessen Vicat-Erweichungstemperatur um mindestens 15 °C niedriger als die des besagten kristallinen Polypropylen-Harz liegt.

4. Verfahren nach Anspruch 3, worin besagte Erhitzung der besagten Perlen eine Vorerhitzung besagter Perlen mit Dampf mit einem ersten Druck und Erhitzen besagter Perlen mit Dampf mit einem zweiten Druck umfasst, um besagte Perlen zu Schmelzen und aneinander zu binden, wobei besagter erster Druck um 0,05 bis 0,3 MPa niedriger als besagter zweiter Druck ist.

**Revendications**

1. Moulage expansé épais ayant une taille permettant la formation d'une sphère ayant un diamètre d'au moins 200 mm par coupe, ledit moulage expansé pouvant être obtenu en moulant des perles de résine thermoplastique expansée dans la cavité d'un moule et ayant une efficacité de la liaison par fusion d'au moins 50 % dans une région centrale du moulage expansé, dans lequel ledit moulage expansé a une densité apparente inférieure à 30 g/l mais supérieure ou égale à 10 g/l,
   dans lequel chacune desdites perles de résine thermoplastique expansée comprend :
   un coeur qui est dans un état expansé et qui comprend une résine de polypropylène cristalline, et
   une enveloppe qui est dans un état sensiblement non expansé et qui entoure ledit coeur, ladite enveloppe comprenant un polymère polyoléfinique cristallin dont le point de fusion est inférieur d'au moins 15 °C à celui de ladite résine de polypropylène cristallin ou un polymère polyoléfinique non cristallin dont la température de ramollissement Vicat est inférieure d'au moins 15 °C à celle de ladite résine de polypropylène cristallin.

2. Moulage expansé épais selon la revendication 1, dans lequel ledit moulage expansé se présente sous la forme

d'un cube ou d'un parallélépipède rectangle, la plus petite des trois distances entre les surfaces opposées de celui-ci valant de 300 mm à 1 000 mm.

**3.** Procédé de préparation d'un moulage expansé épais ayant une taille permettant la formation d'une sphère ayant une diamètre d'au moins 200 mm par coupe,
comprenant le remplissage de la cavité d'un moule avec des perles de résine thermoplastique expansée, et
le chauffage desdites perles dans ladite cavité du moule à l'aide de vapeur de façon à faire fondre et à lier les perles ensemble, lesdites perles de résine thermoplastique expansée ayant unie masse volumique apparente de 10 à 300 g/l et une pression interne de 0,005 à 0,98 MPa (G),
dans lequel chacune desdites perles de résine thermoplastique expansée comprend :
un coeur qui est dans un état expansé et qui comprend une résine de polypropylène cristalline, et
une enveloppe qui est dans un état sensiblement non expansé et qui entoure ledit coeur, ladite enveloppe comprenant un polymère polyoléfinique cristallin dont le point de fusion est inférieur d'au moins 15 °C à celui de ladite résine de polypropylène cristallin ou un polymère polyoléfinique non cristallin dont la température de ramollissement Vicat est inférieure d'au moins 15 °C à celle de ladite résine de polypropylène cristallin.

**4.** Procédé selon la revendication 3, dans lequel ledit chauffage desdites perles comprend
le préchauffage desdites perles à l'aide de vapeur à une première pression, et
le chauffage desdites perles à l'aide de vapeur à une deuxième pression de façon à faire fondre et à lier les perles ensemble, ladite première pression étant inférieure de 0,05 à 0,3 MPa à ladite deuxième pression.

FIG. 1

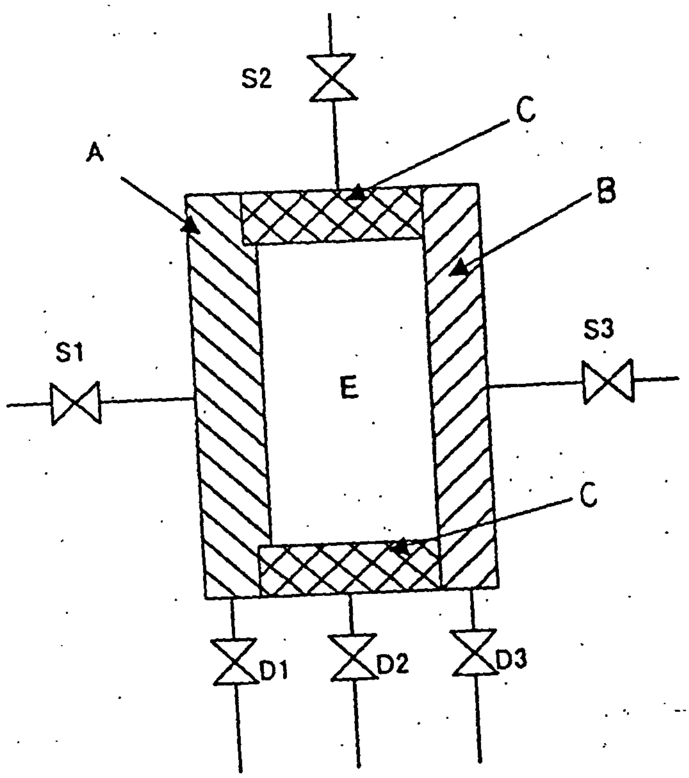

FIG. 2

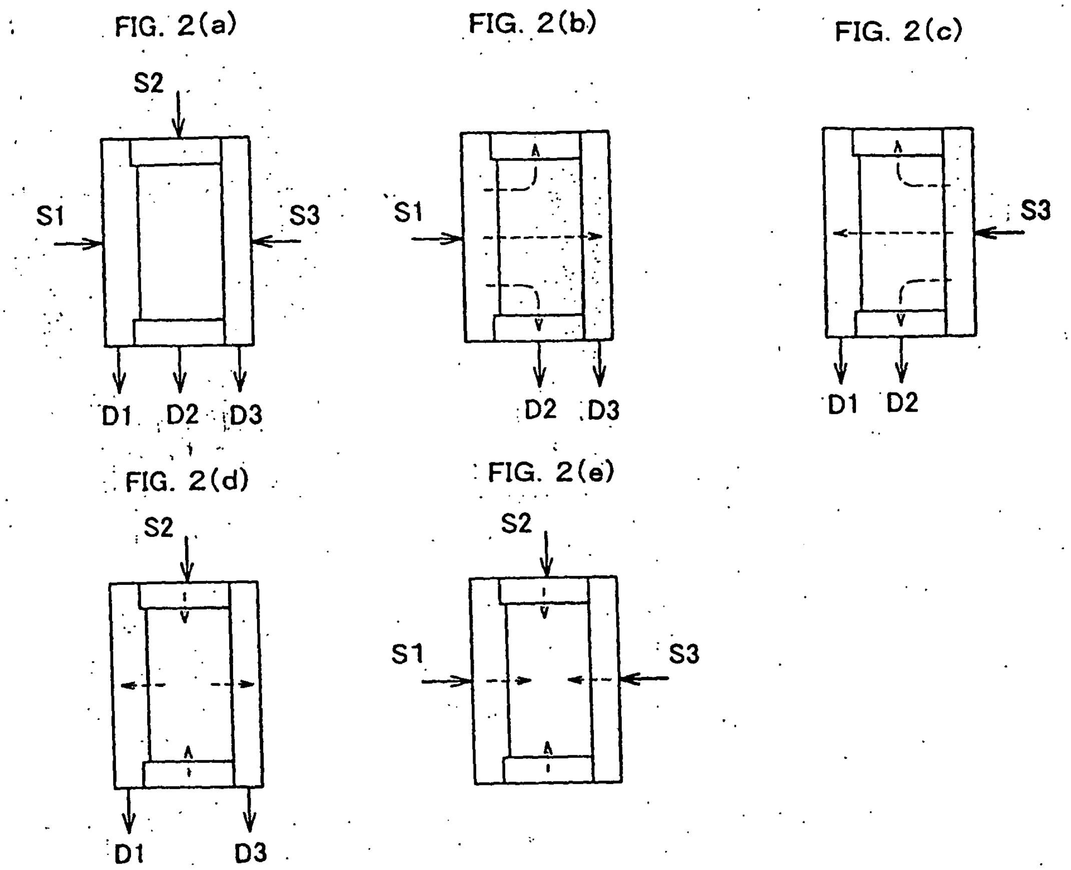
FIG. 2(a)
S2
S1
S3
D1
D2
D3
FIG. 2(b)
S1
D2
D3
FIG. 2(c)
S3
D1
D2
FIG. 2(d)
S2
D1
D3
FIG. 2(e)
S2
S1
S3

FIG. 3

(a)

(b)

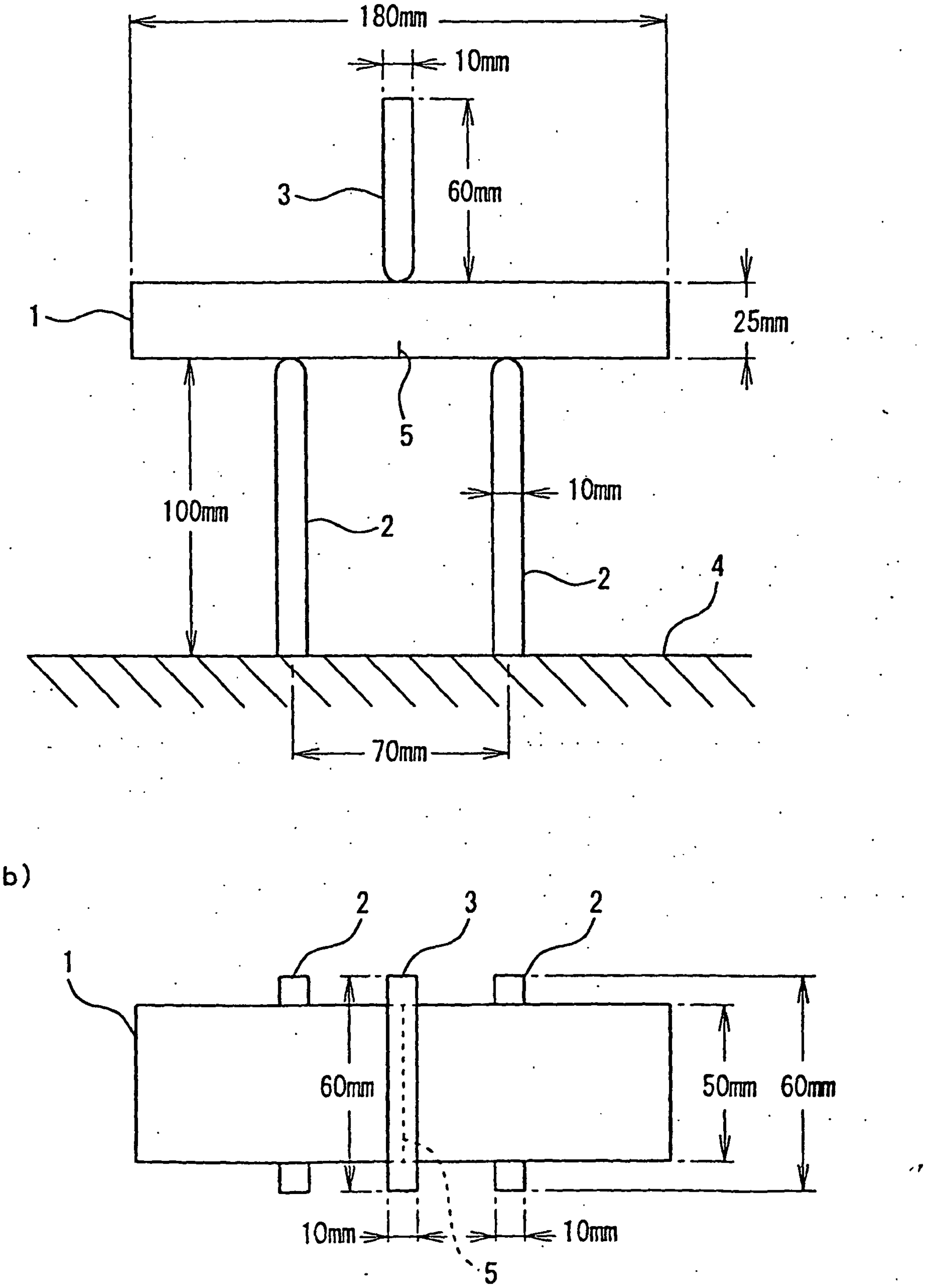
180mm
10mm
60mm
3
1
25mm
5
100mm
10mm
2
2
4
70mm
2
3
2
1
60mm
50mm
60mm
10mm
10mm
5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3146004 B
- EP 0928806 A
- JP 4116125 B
- JP 4323858 B
- JP 4429522 B
- JP 60185816 A
- JP 49002183 B
- JP 56001344 B
- DE 1285722 A
- DE 2107683 A
- JP 2002200635 A
- JP 2003201361 A
- JP 46038359 B
- JP 51022951 B
- JP 62207232 A